# EUROPEAN PATENT SPECIFICATION

(11) **EP 1 630 065 B1**
(45) Date of publication and mention of the grant of the patent: **23.05.2007**
(21) Application number: 04425642.8
(22) Date of filing: 30.08.2004
(51) Int. Cl.: B62D 1/04, B62D 1/06

(54) **Automotive cloche-shaped steering wheel**
Glockenförmiges Kraftfahrzeug-Lenkrad
Volant de véhicule automobile à la forme d'une cloche

(43) Date of publication of application: 01.03.2006
(73) Proprietor: C.R.F. SOCIETA' CONSORTILE PER AZIONI, 10043 Orbassano (TO) (IT)
(72) Inventor: Masoero, Giorgio c/o C.R.F. Società Consortile, 10043 Orbassano (TO) (IT); Seccardini, Riccardo c/o C.R.F. Società Consortile, 10043 Orbassano (TO) (IT); Camardella, Pietro c/oC.R.F. Società Consortile, 10043 Orbassano (TO) (IT)
(74) Representative: Cerbaro, Elena

(56) References cited:
- EP-A2- 1 083 097
- DE-A1- 10 101 010
- DE-A1- 19 718 979
- US-A1- 2001 007 294

## Description

The present invention relates to an automotive cloche-shaped steering wheel.

Passenger vehicle steering wheels are known comprising a central hub fixed to a rotary steering column, and a circular outer grip fixed to the central hub by a number of spokes.

Cloche-shaped steering wheels for aircraft and racing cars are also known comprising a central hub fixed to a rotary steering column, and two grips connected specularly to the central hub.

In both types of steering wheel, the grips are of standard shape and size defined at the design stage and the same for all drivers, as opposed to being designed ergonomically to take into account different driving habits and/or hand sizes.

From document DE 101 01 010 Al, it is known a steering wheel including a changeable module adapted to be removably connected to a base module of the steering wheel. The base module includes a ring-shaped rim secured to one or more spokes, which are connected to a hub secured to the conventional rotary steering column, whereby the gripping part of the steering wheel is not changeable.

From documents US 2001/007294 Al, EP A2-1 083 097, and DE 197 18 978 Al are also known steering devices or wheels wherein several controls are mounted on a central plate or on spokes, which are integral with the central plate and with the ring-shaped rim.

It is an object of the present invention to provide an automotive cloche-shaped steering wheel designed to at least partly eliminate the drawbacks of known steering wheels.

According to the present invention, there is provided an automotive cloche-shaped steering wheel comprising a supporting base fixed to a rotary steering column, and a pair of grips connected to said supporting base; characterized in that the grips of said pair are connected removably to said supporting base, said pair of grips being selectable among an available number of pairs of grips of different shapes and sizes to permit customization of the steering wheel according to the habits and/or the physical size of the driver.

A preferred, non-limiting embodiment of the invention will be described by way of example with reference to the accompanying drawings, in which:
Figure 1 shows a front view of a cloche-shaped steering wheel in accordance with the invention;
Figure 2 shows a view in perspective of a customized grip of the steering wheel;
Figure 3 shows an exploded view of a detail in Figure 1.

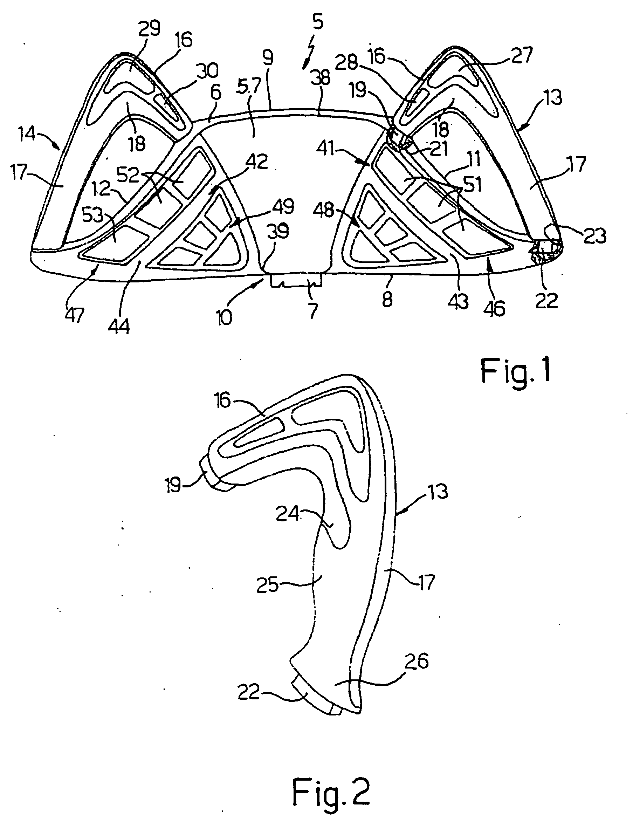

Number 5 in Figure 1 indicates as a whole an automotive cloche-shape steering wheel, in particular for passenger cars. In the following the term steering wheel is meant as a steering device without a closed-loop ring-shaped rim. Steering wheel 5 comprises a supporting base or hub 6 fixed in known manner to the end of a rotary steering column 7 of the vehicle, and substantially in the form of an isosceles trapezium comprising a major base 8, a minor base 9, and two sloping sides 11 and 12 curving slightly towards a central portion 10 of supporting base 6. Steering wheel 5 also comprises two mirrored grips 13 and 14 connected removably to supporting base 6, as described in detail later on.

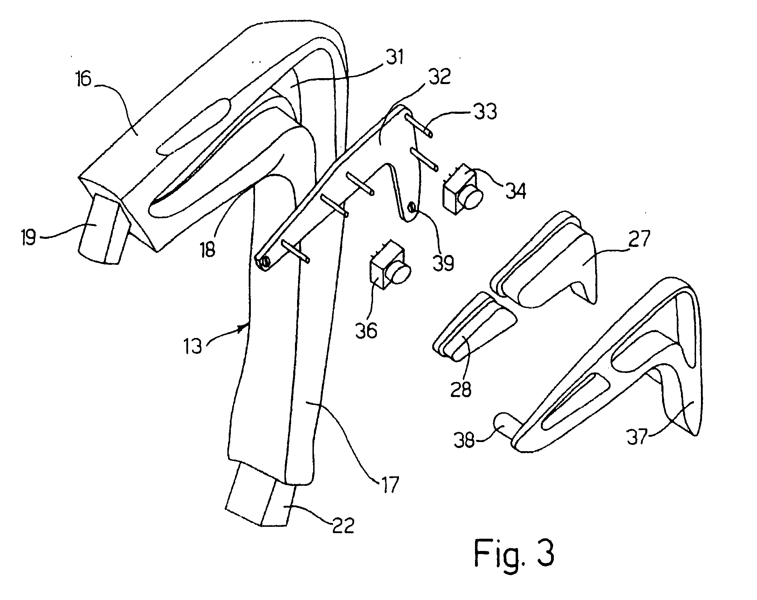

According to the invention, each grip 13, 14 comprises at least one end fittable frictionally inside a corresponding seat in supporting base 6. More specifically, each grip 13, 14 comprises two contoured, slightly arc-shaped arms 16 and 17 connected at an intersection 18 forming a slightly acute angle. In Figures 1 and 3, arms 16 and 17 of each grip 13, 14 also taper from intersection 18 towards their respective ends.

Each arm 16 is shorter in length than relative arm 17, and has a prismatic end appendix 19 which fits frictionally inside a corresponding seat 21. Each of the two seats 21 is located substantially at a corresponding end of minor base 9 of the trapezium of supporting base 6, so that each arm 16 extends upwards from minor base 9. Each arm 17 also has a prismatic end appendix 22, which fits frictionally inside a corresponding seat 23; and the two seats 23 are located substantially at corresponding ends of major base 8 of the trapezium of supporting base 6, so that each is located along a corresponding side 11, 12 of the trapezium.

The pair of grips 13, 14 can be selected from a number of pairs of grips of different shapes and/or sizes, designed for different driver requirements, habits, preferences or physical size, so that cloche-like steering wheel 5 can be fully customized. In Figures 1 and 3, arm 17 is appropriately arc-shaped, but is only contoured by tapering from intersection 18 towards appendix 22.

Figure 2 shows another grip 13 having an arm 17 shaped ergonomically for grip by the driver's hand. More specifically, arm 17 in Figure 2 comprises a depressed area 24 on which the driver's thumb rests, and a slightly convex area 25 forming an anatomical grip surface for the driver's hand, and may also comprise a downward-flaring area 26 for supporting the base of the driver's hand and improving grip. Obviously, the pairs of grips 13, 14 provided by the maker will include a pair best suited to the user of the vehicle to enable optimum customization of the steering wheel.

According to one aspect of the invention, each grip 13, 14 has at least one control button operated by the driver's thumb. More specifically, the right-hand grip 13 has two buttons 27 and 28 located at intersection 18 of the two arms 16 and 17, and the left-hand grip 14 has two buttons 29 and 30 also located at intersection 18 of corresponding arms 16 and 17.

Buttons 27 and 29 are angled in shape, extend located along both relative arms 16 and 17, and control the right- and left-turn indicators respectively. Buttons 28 and 30 are each located along relative shorter arm 16, and control flashing or short-term operation of corresponding devices, in particular, a single sweep of the windscreen-wiper or flashing of the headlights.

To support buttons 27, 28 and 29, 30, each grip 13 and 14 has a cavity 31 (Figure 3) located at relative intersection 18; each cavity 31 houses a corresponding guide support 32 for respective buttons 27, 28 and 29, 30; and each guide support 32 is defined by a plate made of plastic material and having a number of pins 33 engaged by two electric microswitches 34 and 36.

Microswitches 34 and 36 are activated by respective buttons 27, 28 and 29, 30, which are advantageously back-lighted. Microswitches 34, 36 are connected electrically to electric wires housed or integrated in arm 16, and which are connected, for example, by pins not shown, to corresponding electric wires housed or integrated in supporting base 6.

Finally, each grip 13, 14 has a face plate 37 for respective buttons 27, 28 and 29, 30; and face plate 37 has appendixes 38, which are pressed inside corresponding seats 39 formed in guide support 32 and in cavity 31 at intersection 18 of arms 16 and 17.

A member or plate 57, which is pressed manually to sound the horn, is located at central portion 10 of supporting base 6, has a slightly convex cross section, and is substantially in the form of an isosceles trapezium having a major base 38 at minor base 9 of the trapezium of supporting base 6, and a minor base 39 adjacent to major base 8 of the trapezium of supporting base 6.

Supporting base 6 also comprises two lateral portions 41 and 42 housing two corresponding sets 43 and 44 of control buttons. Each set 43, 44 of buttons comprises a row 46, 47 of buttons parallel to the corresponding side 11, 12 of the trapezium of supporting base 6; and a group 48, 49 of buttons adjacent to central portion 10 of supporting base 6, and therefore to horn plate 57, and comprising four buttons arranged in a triangle.

More specifically, the row 46 of buttons in the right-hand set 43 comprises three buttons 51 for controlling all the windscreen-wiper functions; the left-hand row 47 of buttons comprises two light control buttons 52; and a third button 53 in row 47 of buttons and all the buttons in the two groups of buttons control various auxiliary vehicle functions, such as the power windows, fog lights, flashing parking lights, car radio, telephone, etc.

The buttons in both sets 43 and 44 are also back-lighted, and are fitted to supporting base 6 in the same way as buttons 27, 28 and 29, 30. More specifically, each row 46, 47 of buttons and each group 48, 49 of buttons are housed in corresponding cavities in supporting base 6, and have corresponding face plates.

The advantages, as compared with known steering wheels, of cloche-shaped steering wheel 5 according to the invention will be clear from the foregoing description. In particular, removable connection of grips 13 and 14, and the available range of differently contoured pairs of grips 13 and 14, provide for customizing steering wheel 5 according to both the habits and physical size of the driver.

Moreover, the arrangement of the control buttons on grips 13, 14 and supporting base 6 of steering wheel 5, and the symmetrical arrangement of the control buttons, make them easy to operate without the driver's hands being removed from steering wheel 5.

Clearly, changes may be made to the assembly system as described herein without, however, departing from the scope of the accompanying Claims. For example, changes may be made to the shape of supporting base 6 and/or of horn plate 57; one face plate may be provided for all the buttons in each set 43, 44 on respective lateral portion 41, 42; changes may be made to the arrangement of both sets 43, 44 on lateral portions 41, 42; and, finally, changes may be made to the way in which the buttons are fitted to grips 13, 14 and/or to lateral portions 41, 42 of supporting base 6.

## Claims

1. An automotive cloche-shaped steering wheel comprising a supporting base (6) fixed to a .rotary steering column (7), and a pair of grips (13, 14) connected to said supporting base (6); **characterized in that** the grips (13, 14) of said pair are connected removably to said supporting base (6), said pair of grips (13, 14) being selectable among an available number of pairs of grips (13, 14) of different shapes and sizes to permit customisation of the steering wheel according to the habits and/or the physical size of the driver.

2. A cloche-shaped steering wheel as claimed in Claim 1, **characterized in that** each of said grips (13, 14) comprises, at least at one end, an appendix (19, 22) which fits frictionally inside a corresponding seat (21, 23) in said supporting base (6).

3. A cloche-shaped steering wheel as claimed in Claim 1 or 2, **characterized in that** said supporting base (6) is substantially in the form of an isosceles trapezium; each of said grips (13, 14) comprising two arms (16, 17) at an angle with respect to each other; a first (17) of said arms (16, 17) being shaped for grip; each of said arms (16, 17) having an appendix (19, 22) which fits inside a corresponding seat (21, 23) in said supporting base (6); and said seats (21, 23) being located substantially at respective ends of the two bases (9, 8) of the trapezium of said supporting base (6).

4. A cloche-shaped steering wheel as claimed in Claim 3, **characterized in that** said first arm (17) is shaped ergonomically, and comprises a thumb-supporting area (24); an anatomical grip area (25) for the driver's hand; and a hand-supporting base area (26).

5. A cloche-shaped steering wheel as claimed in one of the foregoing Claims, **characterized by** comprising control buttons (27, 28; 29, 30; 43, 44) located partly on said grips (13, 14) and partly on said supporting base (6).

6. A cloche-shaped steering wheel as claimed in Claim 5, **characterized in that** each of said grips (13, 14) comprises a pair of thumb-operated buttons (27, 28; 29, 30).

7. A cloche-shaped steering wheel as claimed in Claim 6, **characterized in that** each of said grips (13, 14) comprises an intersection (18) of the relative arms (16, 17), at which the corresponding pair of buttons (27, 28; 29, 30) is located; one button (27, 29) in each pair of buttons (27, 28; 29, 30) controlling a corresponding turn indicator, while the other button (28, 30) in each pair of buttons (27, 28; 29, 30) controls intermittent operation of a corresponding vehicle device.

8. A cloche-shaped steering wheel as claimed in Claim 7, **characterized in that** said intermittent operation comprises flashing the headlights and a single sweep of the windscreen-wiper.

9. A cloche-shaped steering wheel as claimed in one of Claims 5 to 8, **characterized in that** said supporting base (6) comprises a central portion (10), at which a horn control member (57) is located; and two lateral portions (41, 42), at which two corresponding sets (43, 44) of buttons are located; said sets (43, 44) of buttons being arranged substantially specularly with respect to each other.

10. A cloche-shaped steering wheel as claimed in Claims 3 and 9, **characterized in that** said horn control member (37) is substantially in the form of an isosceles trapezium with the major base (40) located at the minor (9) base of the trapezium of said supporting base (6).

11. A cloche-shaped steering wheel as claimed in Claim 9 or 10, **characterized in that** each of said sets (43, 44) of buttons comprises a row (46, 47) of buttons parallel to a relative side (11, 12) of the trapezium of said supporting base (6); and a group (48, 49) of buttons adjacent to said horn control member (57).

12. A cloche-shaped steering wheel as claimed in Claim 11, **characterized in that** one of said rows (46, 47) of buttons comprises windscreen-wiper control buttons (51); the other of said rows (46, 47) of buttons comprising light control buttons (52); and said groups (48, 49) of buttons comprising auxiliary controls.

13. A cloche-shaped steering wheel as claimed in one of Claims 5 to 12, **characterized in that** each of said grips (13, 14) comprises a cavity (31) housing a guide support (32) for at least two buttons (27, 28; 29, 30); a face plate (37) guiding said buttons (27, 28; 29, 30) and having appendixes (38) which are pressed inside corresponding seats (39) in said guide support (32) and said cavity (31).

14. A cloche-shaped steering wheel as claimed in Claim 10 and one of Claims 11 to 13, **characterized in that** each of said lateral portions (41, 42) comprises at least one cavity for housing corresponding buttons; and at least one corresponding face plate for guiding the buttons in said cavity.

15. A cloche-shaped steering wheel as claimed in Claim 13 or 14, **characterized in that** said buttons (27, 28; 29, 30; 43, 44) are back-lighted, and act on corresponding electric microswitches (34, 36).

## Patentansprüche

1. Glockenförmiges Kraftfahrzeuglenkrad mit einem an einer drehbaren Lenksäule (7) befestigten Halte-Basisteil (6) und einem Paar mit dem Halte-Basisteil (6) verbundener Griffen (13,14),
**dadurch gekennzeichnet, dass**
die Griffe (13,14) des Paars lösbar mit dem Halte-Basisteil (6) verbunden sind, wobei das Paar Griffe (13,14) aus eine verfügbaren Anzahl von Griffen (13,14) mit unterschiedlichen Formen und Größen auswählbar ist, um eine kundenspezifische Anpassung des Lenkrads entsprechend den Gewohnheiten und/oder der physischen Größe des Fahrers zu ermöglichen.

2. Glockenförmiges Lenkrad nach Anspruch 1, **dadurch gekennzeichnet, dass** jeder Griff (13,14) mindestens an einem Ende einen Vorsprung (19,22) aufweist, der reibschlüssig in einen entsprechenden Sitz (21, 23) in dem Halte-Basisteil (6) passt.

3. Glockenförmiges Lenkrad nach Anspruch 1 oder 2, **dadurch gekennzeichnet, dass** das Halte-Basisteil (6) im Wesentlichen die Form eines gleichschenkligen Trapezes hat, wobei jeder Griff (13,14) zwei in einem Winkel zueinander angeordnete Arme (16,17) aufweist, wobei ein erster Arm (17) der Arme (16,17) zum Ergreifen ausgebildet ist, wobei jeder Arm (16,17) einen Vorsprung (19,22) aufweist, der in einen entsprechenden Sitz (21,23) in dem Halte-Basisteil (6) passt, und wobei die Sitze (21,23) im Wesentlichen an jeweiligen Enden der beiden Basisteile (9,8) des Trapezes des Halte-Basisteils (6) angeordnet sind.

4. Glockenförmiges Lenkrad nach Anspruch 3, **dadurch gekennzeichnet, dass** der erste Arm (17) ergonomisch ausgebildet ist und einen Daumenauflagebereich (24), einen anatomischen Greifbereich (25) für die Hand des Fahrers und einen Handauflage-Basisbereich (26) aufweist.

5. Glockenförmiges Lenkrad nach einem der vorhergehenden Ansprüche, **dadurch gekennzeichnet, dass** es teilweise an den Griffen (13,14) und teilweise an dem Halte-Basisteil (6) angeordnete Steuerknöpfe (27,28; 29,30;43,44) aufweist.

6. Glockenförmiges Lenkrad nach Anspruch 5, **dadurch gekennzeichnet, dass** jeder Griff (13,14) ein Paar mit dem Daumen betätigbarer Knöpfe (27,28;29,30) aufweist.

7. Glockenförmiges Lenkrad nach Anspruch 6, **dadurch gekennzeichnet, dass** jeder Griff (13,14) einen Schnittpunkt (18) der relativen Arme (16,17) aufweist, an dem das entsprechende Paar Knöpfe (27,28;29, 30) angeordnet ist, wobei ein Knopf (27,29) jedes Knopfpaars (27,28; 29,30) einen entsprechenden Richtungsänderungsanzeiger steuert, während der andere Knopf (28,30) jedes Knopfpaars (27,28;29,30) einen intermittierenden Betrieb einer Fahrzeugeinrichtung steuert.

8. Glockenförmiges Lenkrad nach Anspruch 7, **dadurch gekennzeichnet, dass** der intermittierende Betrieb das Aufblenden von Scheinwerfern und einen einzigen Wischvorgang des Scheibenwischers umfasst.

9. Glockenförmiges Lenkrad nach einem der Ansprüche 5 bis 8, **dadurch gekennzeichnet, dass** das Halte-Basisteil (6) einen zentralen Teil (10), in dem sich ein Hupensteuerelement (57) befindet, und zwei Seitenteile (41,42) aufweist, an denen sich zwei einander entsprechende Sätze (43,44) von Knöpfen befinden, die im Wesentlichen spiegelbildlich zueinander angeordnet sind.

10. Glockenförmiges Lenkrad nach Anspruch 3 und 9, **dadurch gekennzeichnet, dass** das Hupensteuerelement (57) im Wesentlichen die Form eines gleichschenkligen Trapezes hat, dessen größeres Basisteil (40) an dem kleineren Basisteil (9) des Trapezes des Halte-Basisteils (6) angeordnet ist.

11. Glockenförmiges Lenkrad nach Anspruch 9 oder 10, **dadurch gekennzeichnet, dass** jeder Satz (43,44) von Knöpfen eine parallel zu einer jeweiligen Seite (11,12) des Trapezes des Halte-Basisteils (6) verlaufende Reihe (46,47) von Knöpfen und eine Gruppe (48,49) von dem Hupensteuerelement (57) benachbarten Knöpfen aufweist.

12. Glockenförmiges Lenkrad nach Anspruch 11, **dadurch gekennzeichnet, dass** eine der Reihen (46,47) von Knöpfen Scheibenwischersteuerknöpfe (51) aufweist, die andere Reihe (46,47) von Knöpfen Lichtsteuerknöpfe (52) aufweist und die Gruppen (48,49) von Knöpfen Hilfssteuerungen aufweisen.

13. Glockenförmiges Lenkrad nach einem der Ansprüche 5 bis 12, **dadurch gekennzeichnet, dass** jeder Griff (13,14) einen Hohlraum (31) zum Aufnehmen einer Führungshalterung (32) für mindestens zwei Knöpfe (27, 28;29,30) und eine Stirnplatte (37) aufweist, die zum Führen der Knöpfe (27,28;29,30) vorgesehen und mit Vorsprüngen (38) versehen ist, welche in entsprechende Sitze (39) in der Führungshalterung (32) und den Hohlraum (31) gedrückt sind.

14. Glockenförmiges Lenkrad nach Anspruch 10 und einem der Ansprüche 11 bis 13, **dadurch gekennzeichnet, dass** jeder Seitenteil (41,42) mindestens einen Hohlraum zum Aufnehmen entsprechender Knöpfe und mindestens eine entsprechende Stirnplatte zum Führen der Knöpfe in dem Hohlraum aufweist.

15. Glockenförmiges Lenkrad nach Anspruch 13 oder 14, **dadurch gekennzeichnet, dass** die Knöpfe (27,28;29,30;43,44) hinterleuchtet sind und entsprechende elektrische Mikroschalter (34,36) betätigen.

## Revendications

1. Volant de direction automobile en forme de cloche, comprenant une base de support (6) fixée à une colonne de direction rotative (7), et une paire de poignées (13, 14) raccordées à ladite base de support (6) ; **caractérisé en ce que** les poignées (13, 14) de ladite paire sont raccordées de manière amovible à ladite base de support (6), ladite paire de poignées (13, 14) pouvant être choisie parmi un nombre disponible de paires de poignées (13, 14) de différentes formes et tailles afin de permettre la personnalisation du volant de direction selon les habitudes et/ou la taille physique du conducteur.

2. Volant de direction en forme de cloche selon la revendication 1, **caractérisé en ce que** chacune desdites poignées (13, 14) comprend, au moins à une extrémité, un prolongement (19, 22) qui s'adapte par frottement à l'intérieur d'un logement (21, 23) correspondant dans ladite base de support (6).

3. Volant de direction en forme de cloche selon la revendication 1 ou 2, **caractérisé en ce que** ladite base de support (6) se présente sensiblement sous la forme d'un trapèze isocèle ; chacune desdites poignées (13, 14) comprenant deux bras (16, 17) qui forment un certain angle l'un par rapport à l'autre ; un premier (17) desdits bras (16, 17) étant configuré à des fins de préhension ; chacun desdits bras (16, 17) ayant un prolongement (19, 22) qui s'adapte à l'intérieur d'un logement (21, 23) correspondant dans ladite base de support (6) ; et lesdits logements (21, 23) étant situés sensiblement aux extrémités respectives des deux bases (9, 8) du trapèze de ladite base de support (6).

4. Volant de direction en forme de cloche selon la revendication 3, **caractérisé en ce que** ledit premier bras (17) est configuré de manière ergonomique, et comprend une zone soutenant le pouce (24) ; une zone de préhension anatomique (25) pour la main du conducteur ; et une zone de base soutenant la main (26).

5. Volant de direction en forme de cloche selon l'une quelconque des revendications précédentes, **caractérisé en ce qu'**il comprend des boutons de commande (27, 28 ; 29, 30 ; 43, 44) situés en partie sur lesdites poignées (13, 14) et en partie sur ladite base de support (6).

6. Volant de direction en forme de cloche selon la revendication 5, **caractérisé en ce que** chacune desdites poignées (13, 14) comprend une paire de boutons actionnés par le pouce (27, 28 ; 29, 30).

7. Volant de direction en forme de cloche selon la revendication 6, **caractérisé en ce que** chacune desdites poignées (13, 14) comprend une intersection (18) des bras relatifs (16, 17), au niveau de laquelle la paire correspondante de boutons (27, 28 ; 29, 30) est située ; un bouton (27, 29) dans chaque paire de boutons (27, 28; 29, 30) commandant un indicateur de virage correspondant tandis que l'autre bouton (28, 30) dans chaque paire de boutons (27, 28, 29, 30) commande le fonctionnement par intermittence d'un dispositif automobile correspondant.

8. Volant de direction en forme de cloche selon la revendication 7, **caractérisé en ce que** ledit fonctionnement par intermittence comprend le clignotement des phares et un seul balayage de l'essuie-glace.

9. Volant de direction en forme de cloche selon l'une quelconque des revendications 5 à 8, **caractérisé en ce que** ladite base de support (6) comprend une section centrale (10), au niveau de laquelle est situé un élément de commande de klaxon (57) ; et deux sections latérales (41, 42), au niveau desquelles sont situés deux ensembles correspondants (43, 44) de boutons ; lesdits ensembles (43, 44) de boutons étant agencés de manière sensiblement symétrique l'un par rapport à l'autre.

10. Volant de direction en forme de cloche selon l'une des revendications 3 et 9, **caractérisé en ce que** ledit élément de commande du klaxon (57) se présente sensiblement sous la forme d'un trapèze isocèle dont la grande base (40) est située au niveau de la petite base (9) du trapèze de ladite base de support (6).

11. Volant de direction en forme de cloche selon la revendication 9 ou 10, **caractérisé en ce que** chacun desdits ensembles (43, 44) de boutons comprend une rangée (46, 47) de boutons parallèle à un côté relatif (11, 12) du trapèze de ladite base de support (6) ; et un groupe (48, 49) de boutons adjacent auxdits éléments de commande du klaxon (57).

12. Volant de direction en forme de cloche selon la revendication 11, **caractérisé en ce que** l'une desdites rangées (46, 47) de boutons comprend des boutons de commande de l'essuie-glace (51) ; l'autre desdites rangées (46, 47) de boutons comprenant des boutons de réglage de la lumière (52) ; et lesdits groupes (48, 49) de boutons comprenant des commandes auxiliaires.

13. Volant de direction en forme de cloche selon l'une quelconque des revendications 5 à 12, **caractérisé en ce que** chacune desdites poignées (13, 14) comprend une cavité (31) logeant un support de guidage (32) pour au moins deux boutons (27, 28 ; 29, 30); une plaque frontale (37) guidant lesdits boutons (27, 28; 29, 30) et comportant des prolongements (38) qui sont appuyés à l'intérieur de logements correspondants (39) dans ledit support de guidage (32) et ladite cavité (31).

14. Volant de direction en forme de cloche selon la revendication 10 et l'une quelconque des revendications 11 à 13, **caractérisé en ce que** chacune desdites sections latérales (41, 42) comprend au moins une cavité permettant de loger des boutons correspondants ; et au moins une plaque frontale correspondante permettant de guider les boutons dans ladite cavité.

15. Volant de direction en forme de cloche selon la revendication 13 ou 14, **caractérisé en ce que** lesdits boutons (27, 28 ; 29, 30 ; 43, 44) sont rétro-éclairés, et agissent sur des micro-interrupteurs électriques correspondants (34, 36).
